# EUROPEAN PATENT APPLICATION

(11) **EP 0 737 419 A1**
(43) Date of publication of application: **16.10.1996**
(21) Application number: 96830199.4
(22) Date of filing: 09.04.1996
(51) Int. Cl.: A01G 27/00

(54) **Flower pot for automatic and continuous watering of the bedded plant**

(30) Priority: 13.04.1995 IT MC950034
(71) Applicant: Marchei, Quintilio, Ancona (IT); Marchei, Daniela, Ancona (IT)
(72) Inventor: Marchei, Quintilio, Ancona (IT); Marchei, Daniela, Ancona (IT)
(74) Representative: Baldi, Claudio

(57) **Abstract**

This invention concerns a flower vase with automatic and continuous watering system consisting of an external container (1) and a smaller internal container (2) which is hermetically sealed at the top by a special lid having a hole through which the stem of the plant passes; the special feature of the flower vase is that the two containers (1,2) have a space (3) running along the perimeter and a horizontal base compartment (4) which acts as a collection tray for the water which first evaporates and then condenses below said lid spraying the soil in the flower vase.

## Description

The object of the invention is a flower vase with automatic and continuous watering of the plant contained in the vase.

The invention is conceived to meet the requirements of those people who love keeping house plants; one of their well known problem is to water regularly the plants.

Especially during spring and summer you often need to water plants otherwise they can wither.

Nowadays you can find spontaneous devices which properly fill up may water the plant for a time.

Existing watering devices usually consist of plastic tanks or bottomed vases which water the plants by capillarity action.

For the fist time, the flower-containing vase avails itself of a plant spontaneous watering principle which is completely different from all the products sold today: this invention is based on the principle of natural evaporation and following condensation of the water.

Thanks to this principle (later explained in detail) the earth in which the plant is found is covered thoroughly by a quantity of small water drops which are equally distributed on the whole surface and not only concentrated on one spot, which is what usually happens in the ordinary and common capillaries-type devices.

This flower vase is made of a first container (i.e. a water containing tank) housing a second container (i.e. the real vase).

The openings of both containers have the same diameter, but the exterior container is higher and wider than the interior container; moreover all around the interior container there is a series of fissures just below the edge of the opening.

In particular the edge of the opening of the interior container rests against the edge of the exterior container.

The different dimensions of the containers determine the formation of a hollow space between their walls, which is closed on the top because of the precise superimposition of the containers, and the formation of a space between the bottom of the interior and the exterior containers.

The flower vase opening is completely closed by two plastic sheets, each closing one half of the opening itself. The plastic sheets - which act as cover are supported by small frames which are fitted on the edge of the opening itself.

The small frames in fact support the plastic sheets on the perimetral edge of the opening, while the edges of the sheets are free, practically suspended over the axis of symmetry of the vase (i.e. where the free edges are just superimposed upon one another).

When arranging the plastic sheets on the flower vase opening, these should be cut to enable the passage of the plant stem in the vase.

The space between the bottom of the interior container and the bottom of the exterior container (i.e. the tank) must be filled up till water is just over the bottom of the interior container (i.e. the vase).

This water is subject to natural evaporation; the water vapour goes up to the hollow space between the walls of the containers till it finds a natural exit through the above-mentioned fissures, which are just below the edge of the opening.

The water vapour goes then on the top of the flower vase over the earth, without dispersing in the atmosphere, because the opening of the vase is closed by the above-mentioned plastic sheets, which enable only the passage of the plant stem.

In this way the water vapour distributes on the inside surface of the plastic sheets and afterward condenses in small water drops that, because of the gravity, fall down on the earth contained in the vase.

To optimise the watering there are on the inside surface of the plastic sheets small protuberances which favour the stagnation of the condensation on the whole surface of the sheets and the following homogeneous water fall on the whole surface of the earth.

On the plastic sheets there are very small holes to enable a small circulation of air between the inside and the outside of the flower vase, air necessary for the welfare of the plant.

In the interior container walls there are small holes to enable the passage of the water vapour also from the sides of the vase. Just over the bottom of the interior container there is a perimetral series of holes; through these holes the excess of water in the vase can fall into the lower tank to avoid the rot of the roots.

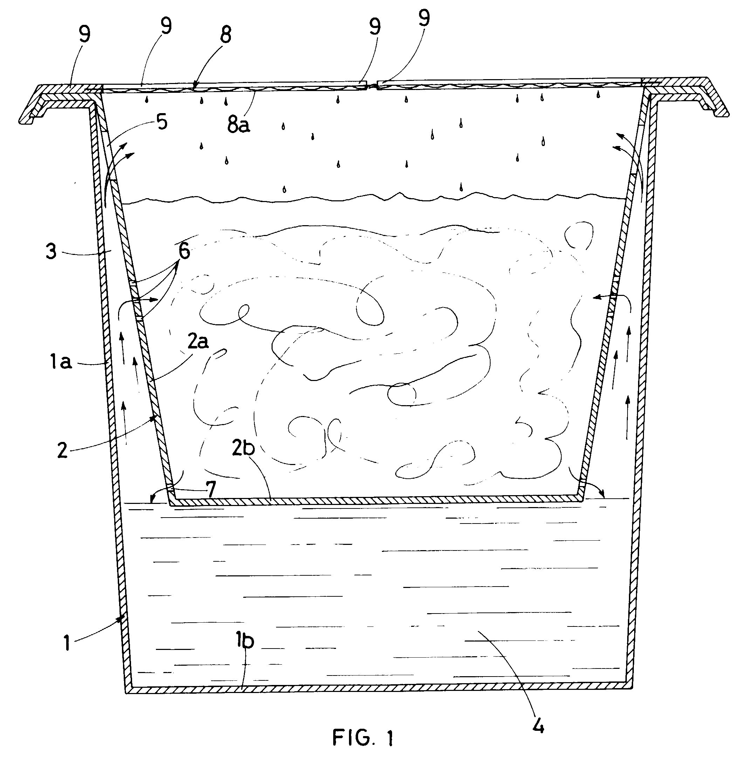

The description of the invention continues with reference to the enclosed drawing (Fig. 1), which is only illustrative and not restrictive; the figure 1 represents the vertical section of the flower vase.

With reference to this figure the flower vase is made of an exterior container (1), i.e. the tank, and of an interior container (2), i.e. the real vase.

The interior container (2) has the same structure as the exterior one (1), but it is lower and smaller; it is provided however that the opening of the interior container (2) is exactly superimposed on the opening of the exterior container (1).

The openings of both containers have the same diameter, but they are different because the interior container is lower and smaller than the exterior container. The opening of the interior container (2) is superimposed on the opening of the exterior one.

The different dimensions of the containers (1,2) determine between their vertical walls (1a, 2a) the formation of a perimetral hollow space (3), and between their horizontal bottoms (1b, 2b) the formation of a space (4) that is the real tank of the water.

On the vertical walls (2a) of the interior container (2) there is perimetral series of fissures just below the opening; these fissures put in touch the hollow space (3) with the top zone of the container itself (2).

In the middle of the vertical walls (2a) of the interior container (2) there are many series of small holes (6) to enable that the earth could be moistened also by the sides of the vase; while just over the bottom (2b) there is a perimetral series of holes (7) which enable the drainage of the excess of water.

The opening of the flower vase is closed through a particular cover made of two plastic sheets (8) which have on the inside surface many small protuberances; these sheets are supported by small frames (9) which fit in the edge of the flower vase itself.

The free edges of the sheets (8) must be cut to enable the passage of the plant stem.

## Claims

1. A flower vase with automatic and continuous watering of the plant contained in the vase, made of a first exterior container (1) and of a second interior container (2) structurally identical to the first, but lower and smaller and having a perimetrical series of fissures (5) just below the edge of its opening and a perimetrical series of small holes (7) just over its bottom (2b); being provided that the opening of the interior container (2) is exactly superimposed on the opening of the exterior one (1); being provided also that this flower vase has a particular cover, made of two plastic sheets (8), which have on the inside surface many small protuberances (8a); these sheets are supported by small frames (9) which fit in the edge of the flower vase itself.

2. A flower vase with automatic and continuous watering of the plant contained in the vase of claim 1, made of an interior container (2), which have many series of small holes (6) in its vertical walls (2a), between the perimetral series of the above-mentioned fissures (5) and the perimetral series of the above-mentioned holes (7).
